# EUROPÄISCHE PATENTANMELDUNG

(11) **EP 4 706 373 A1**
(43) Veröffentlichungstag der Anmeldung: **11.03.2026**
(21) Anmeldenummer: 25192227.4
(22) Anmeldetag: 28.07.2025
(51) Int. Cl.: A01F 15/07, A01F 15/08

(54) **VERFAHREN ZUM BETREIBEN EINER RUNDBALLENPRESSE**

(30) Priorität: 05.09.2024 DE 102024125510
(71) Anmelder: Maschinenfabrik Bernard Krone GmbH & Co. KG, 48480 Spelle (DE)
(72) Erfinder: OLTHOFF, DANIEL, 49808 Lingen (DE); BORCHERS, Falko, 49076 Osnabrück (DE)

(57) **Zusammenfassung**

Die Erfindung betrifft ein Verfahren zum Betreiben einer Rundballenpresse, die eine Presskammer zum Pressen eines Rundballens, eine Wickelvorrichtung zum Umwickeln des gepressten Rundballens, sowie eine Überführungseinrichtung aufweist. Die Wickelvorrichtung weist einen Wickeltisch zur Aufnahme des Rundballens auf. Über die Überführungseinrichtung ist der Rundballen wenigstens anteilig entlang einer Längsachse der Rundballenpresse von der Presskammer zur Wickelvorrichtung überführbar. Der Wickeltisch ist dafür verstellbar zwischen einem Aufnahmebereich und einem Wickelbereich. Um die Ballenübergabe von der Presskammer einer Rundballenpresse zu einer Wickelvorrichtung zu optimieren, weist das Verfahren wenigstens folgende Schritte auf:
- Herstellen des Rundballens in der Presskammer,
- automatisches Ermitteln einer in Fahrtrichtung gegebenen Aufwärtsneigung,
- automatisches Auswählen eines Standard-Übergabevorgangs, wenn die Aufwärtsneigung unter einem ersten Schwellwert liegt, oder eines Hang-Übergabevorgangs, wenn die Aufwärtsneigung über dem ersten Schwellwert liegt,
- Ausführen des ausgewählten Übergabevorgangs,
- Verstellen des Wickeltischs aus dem Aufnahmebereich in den Wickelbereich, und
- Umwickeln des Rundballens, während der Wickeltisch im Wickelbereich angeordnet ist.

Der Wickeltisch wird beim Standard-Übergabevorgang im Aufnahmebereich gehalten, während der Rundballen über die Überführungseinrichtung überführt wird. Beim Hang-Übergabevorgang wird er im Wickelbereich gehalten, während der Rundballen über die Überführungseinrichtung überführt wird, und danach in den Aufnahmebereich verstellt.

## Beschreibung

Die vorliegende Erfindung betrifft Verfahren zum Betreiben einer Rundballenpresse nach Anspruch 1 sowie eine Rundballenpresse nach Anspruch 13.

Rundballenpressen werden in der Landwirtschaft eingesetzt, um Erntegut wie zum Beispiel Heu oder Stroh aufzunehmen und zu Ballen zu verpressen. Das Erntegut wird (zum Beispiel durch eine Pick-up) vom Boden aufgenommen, weitergefördert, normalerweise zerkleinert (zum Beispiel mittels eines Schneidrotors) und schließlich in einer Presskammer zu runden Erntegutballen verpresst, die anschließend mit einem Bindematerial umwickelt werden. Innerhalb der Presskammer erfolgt zum Beispiel ein Umwickeln mit Schnüren oder Netzen, die verhindern, dass der Rundballen wieder auseinanderfällt. In einigen Fällen (zum Beispiel im Falle von Gras) soll der Ballen zusätzlich mit Folie umwickelt werden, die einen Feuchtigkeitsaustausch mit der Umgebung weitgehend unterbindet. Ein solches Umwickeln mit Folie erfolgt regelmäßig nicht in der Presskammer, sondern außerhalb mittels einer eigens vorgesehenen Wickelvorrichtung. Diese kann auf einem von der Rundballenpresse unabhängigen Fahrgestell eines eigenen Fahrzeugs angeordnet sein. Es ist aber auch bekannt, dass die Wickelvorrichtung vom Rahmen der Rundballenpresse getragen und somit in die Rundballenpresse integriert ist, und zwar entgegen der Fahrtrichtung hinter der Presskammer. Die Wickelvorrichtung kann einen Wickeltisch aufweisen, der den Rundballen während des Wickelvorgangs stützt, während mittels umlaufender Wickelarme die Folie appliziert wird. Zusätzlich kann der Wickeltisch umlaufend antreibbare Förderbänder aufweisen, auf denen der Rundballen ruht und die diesen durch ihre Bewegung in Drehung versetzen. Aus der zusammengesetzten Bewegung von Rundballen und Wickelarmen resultiert nach und nach eine vollständige Umwicklung.

Wenn der Rundballen die Presskammer verlässt, gelangt er normalerweise nicht direkt auf den Wickeltisch, sondern über eine zwischengeordnete Überführungseinrichtung.

Diese kann ein oder mehrere Hilfselemente aufweisen, mittels derer der Rundballen aktiv zum Wickeltisch befördert wird. Insbesondere kann sie aber auch eine abschüssige Überführungsstrecke aufweisen, über die sich der Rundballen durch sein Eigengewicht auf den Wickeltisch zu bewegt. Es ist bereits vorgeschlagen worden, den Wickeltisch zwischen einer Aufnahmeposition, in der er optimal für den Übergang des Rundballens von der Überführungseinrichtung angeordnet ist, und einer Wickelposition zu verstellen, in der er optimal für den Wickelvorgang angeordnet ist. Insbesondere in der Aufnahmeposition besteht allerdings situationsbedingt die Gefahr, dass der Rundballen nach hinten über den Wickeltisch hinausrollt oder -gleitet und verloren geht. Diese Gefahr besteht namentlich dann, wenn die Rundballenpresse sich hangaufwärts bewegt, so dass der Wickeltisch relativ zur Presskammer niedriger angeordnet ist als auf ebenem Gelände.

Aufgabe der Erfindung ist es, die Ballenübergabe von der Presskammer einer Rundballenpresse zu einer Wickelvorrichtung zu optimieren.

Die Aufgabe wird gelöst mit einem Verfahren zum Betreiben einer Rundballenpresse mit den Merkmalen des unabhängigen Patentanspruchs 1. Vorteilhafte Ausführungsformen sind den abhängigen Ansprüchen entnehmbar.

Dafür wird ein Verfahren geschaffen zum Betreiben einer Rundballenpresse mit einer Presskammer zum Pressen eines Rundballens, einer Wickelvorrichtung zum Umwickeln des gepressten Rundballens mit einem Wickelmaterial, aufweisend einen Wickeltisch zur Aufnahme des Rundballens, sowie mit einer Überführungseinrichtung, über die der gepresste Rundballen wenigstens anteilig entlang einer Längsachse der Rundballenpresse entgegen einer Fahrtrichtung von der Presskammer zur Wickelvorrichtung überführbar ist, wobei der Wickeltisch verstellbar ist zwischen einem Aufnahmebereich, der wenigstens einer Aufnahmeposition entspricht, und einem Wickelbereich, der wenigstens einer Wickelposition entspricht und in welchem der Wickeltisch wenigstens teilweise bezüglich einer Hochachse höher angeordnet ist als im Aufnahmebereich.

Das Verfahren weist wenigstens die folgenden Schritte auf:
- Herstellen des Rundballens in der Presskammer,
- automatisches Ermitteln einer bezüglich der Fahrtrichtung gegebenen Aufwärtsneigung,
- automatisches Auswählen eines Standard-Übergabevorgangs, wenn die Aufwärtsneigung unter einem ersten Schwellwert liegt, oder eines Hang-Übergabevorgangs, wenn die Aufwärtsneigung über dem ersten Schwellwert liegt,
- Ausführen des ausgewählten Übergabevorgangs,
- Verstellen des Wickeltischs aus dem Aufnahmebereich in den Wickelbereich, und
- Umwickeln des Rundballens, während der Wickeltisch im Wickelbereich angeordnet ist,
wobei beim Standard-Übergabevorgang der Wickeltisch im Aufnahmebereich gehalten wird, während der Rundballen über die Überführungseinrichtung überführt wird, und beim Hang-Übergabevorgang der Wickeltisch im Wickelbereich gehalten wird, während der Rundballen über die Überführungseinrichtung überführt wird, und danach in den Aufnahmebereich verstellt wird.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Das Erntegut kann mit einer Pick-up aufgenommen werden und mit einer Fördervorrichtung, zum Beispiel einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. In jedem Fall ist ein Zuführkanal vorgesehen, den der Erntegutstrom durchläuft, bevor er zur Presskammer gelangt. Die Rundballenpresse kann selbstfahrend ausgebildet sein oder dazu vorgesehen sein, von einem Schlepper gezogen zu werden. Die Rundballenpresse kann eine Steuereinheit aufweisen, die dazu eingerichtet ist, einen oder mehrere Aktoren oder motorische Antriebe der Rundballenpresse anzusteuern. Eine derartige Steuereinheit kann wenigstens teilweise softwaremäßig implementiert sein. Die Steuereinheit kann auch mit wenigstens einer Sensoreinheit der Rundballenpresse verbunden sein, um Sensorwerte zu empfangen.

Innerhalb der Presskammer erfolgt das Verpressen von Erntegut zu Rundballen. Dabei kann innerhalb der Presskammer auch ein Umwickeln des Rundballens (zum Beispiel mit Garn oder einem Netz) erfolgen, welches dazu dient, ein Auseinanderfallen des fertigen Rundballens zu verhindern. Die Presskammer kann wenigstens teilweise durch ein endloses, umlaufend antreibbares Presselement begrenzt sein. Dieses kann insbesondere als ein oder mehrere endlose Pressriemen oder Pressgurte ausgebildet sein, alternativ aber auch zum Beispiel als Kettenstabförderer. Das Presselement kann eine Presskammer fester Größe oder variabler Größe definieren. Die Presskammer und die sie bildenden Elemente sind typischerweise an einem Rahmen der Rundballenpresse angeordnet. Ein derartiger Rahmen bildet eine Grundstruktur der Rundballenpresse und verleiht ihr insgesamt Stabilität. Am Rahmen können über eine geeignete Aufhängung auch Laufräder der Rundballenpresse angebunden sein, ebenso wie - im Falle einer gezogenen Ausgestaltung - eine Deichsel. Außerdem weist der Rahmen typischerweise ein Gehäuse auf, das die innenliegenden Teile, namentlich die Presskammer, nach außen abschirmt. Das Gehäuse kann geöffnet werden, um den fertigen Rundballen auszuwerfen.

Die Wickelvorrichtung ist zum Umwickeln des gepressten Rundballens mit einem Wickelmaterial vorgesehen. Bei dem Wickelmaterial kann es sich insbesondere um Folie handeln, es könnte aber auch zum Beispiel ein Netz sein. Die Wickelvorrichtung ist außerhalb der Presskammer angeordnet. Insofern, als der Rundballen typischerweise bereits in der Presskammer umwickelt wurde, kann die Wickelvorrichtung ein zusätzliches Umwickeln durchführen. Dieses dient allerding zum Beispiel im Falle von Folie als Wickelmaterial nicht primär dazu, ein Auseinanderfallen des Rundballens zu verhindern, sondern den Rundballen vor Feuchtigkeitsaustausch mit der Umgebung zu schützen. Die Wickelvorrichtung kann gemeinsam mit der Presskammer an dem oben genannten Rahmen der Rundballenpresse angeordnet und von diesem gestützt sein.

Die Wickelvorrichtung weist einen Wickeltisch zur Aufnahme des Rundballens auf. Der Wickeltisch bildet die Unterlage des Rundballens während des Wickelvorgangs. Er kann einen in sich starren Wickeltischrahmen aufweisen sowie ein oder mehrere demgegenüber bewegliche Elemente. Insbesondere können umlaufend antreibbare Transportelemente vorgesehen sein, auf denen der Rundballen abgestützt ist und die ihn durch ihre Bewegung in Drehung versetzen. Zum Applizieren des Wickelmaterials kann die Wickelvorrichtung beispielsweise rotatorisch antreibbare Wickelarme aufweisen. Durch eine zusammengesetzten Bewegung von Rundballen und Wickelarmen kann eine vollständige Umwicklung erreicht werden.

Des Weiteren weist die Rundballenpresse eine Überführungseinrichtung auf, über die der gepresste Rundballen wenigstens anteilig entlang einer Längsachse der Rundballenpresse entgegen einer Fahrtrichtung von der Presskammer zur Wickelvorrichtung überführbar ist. "Wenigstens anteilig entlang der Längsachse" bedeutet, dass die Bewegung des Rundballens auch Komponenten senkrecht zur Längsachse aufweisen kann, aber in jedem Fall eine Entfernung bezüglich der Längsachse zurückgelegt wird. Genauer gesagt liegt eine Bewegung entgegen der Fahrtrichtung vor, also zum Heck der Rundballenpresse. Dementsprechend ist die Wickelvorrichtung bezüglich der Längsachse heckseitig, also entgegen der Fahrtrichtung, gegenüber der Presskammer versetzt angeordnet. In diesem Zusammenhang ist ein Überführen "über" die Überführungseinrichtung dahingehend zu verstehen, dass der Rundballen die Überführungseinrichtung passiert. Er kann sich dabei bezüglich einer Hochachse der Rundballenpresse oberhalb wenigstens eines Teils der Überführungseinrichtung bewegen und durch diese gestützt werden.

Der Wickeltisch ist verstellbar zwischen einem Aufnahmebereich, der wenigstens einer Aufnahmeposition entspricht, und einem Wickelbereich, der wenigstens einer Wickelposition entspricht und in welchem der Wickeltisch wenigstens teilweise bezüglich einer Hochachse höher angeordnet ist als im Aufnahmebereich. Die Verstellbarkeit des Wickeltischs kann insbesondere gegenüber dem Rahmen der Rundballenpresse gegeben sein und/oder gegenüber der Überführungseinrichtung. In einigen Ausführungsformen können der Wickelbereich und der Aufnahmebereich genau einer Wickelposition und genau einer Aufnahmeposition des Wickeltischs entsprechen. In anderen Ausführungsformen kann der Wickeltisch innerhalb des Wickelbereichs und des Aufnahmebereichs eine Mehrzahl von Positionen einnehmen. In jedem Fall ist er im Wickelbereich wenigstens teilweise bezüglich der Hochachse höher angeordnet als im Aufnahmebereich. Das heißt wenigstens ein Teil des Wickeltischs ist im Wickelbereich höher angeordnet als im Aufnahmebereich, bevorzugt gilt dies für den gesamten Wickeltisch. Vereinfachend kann man das Verstellen aus dem Aufnahmebereich in den Wickelbereich als "Anheben" bezeichnen und das Verstellen aus dem Wickelbereich in den Aufnahmebereich als "Absenken". Die Bewegung bezüglich der Hochachse kann von einer Bewegung bezüglich der Längsachse und/oder bezüglich der Querachse begleitet werden. Auch kann eine translatorische Bewegung von einer rotatorischen Bewegung begleitet werden. Der Wickeltisch ist wenigstens teilweise motorisch zwischen dem Aufnahmebereich und dem Wickelbereich verstellbar. Hierzu kann die Rundballenpresse einen motorischen Antrieb aufweisen, der zum Beispiel als elektrischer, hydraulischer, elektrohydraulischer oder pneumatischer Antrieb ausgebildet sein kann.

Die Presskammer, die Wickelvorrichtung einschließlich des Wickeltischs, und/oder die Überführungsvorrichtung können durch die oben genannte Steuereinheit steuerbar sein. Insbesondere kann die Steuereinheit wenigstens einen der nachfolgend erläuterte Verfahrensschritte steuern.

Bei dem erfindungsgemäßen Verfahren erfolgt zunächst ein Herstellen des Rundballens in der Presskammer, also ein Verpressen von Erntegut zu dem Rundballen. Dies kann wie bereits geschildert ein Umwickeln des fertig gepressten Rundballens innerhalb der Presskammer umfassen, um die Form des Rundballens zu sichern.

Weiterhin erfolgt ein automatisches Ermitteln einer bezüglich der Fahrtrichtung gegebenen Aufwärtsneigung. Dieser Schritt kann wenigstens teilweise gleichzeitig mit dem Herstellen des Rundballens erfolgen. Bevorzugt erfolgt er gegen Ende der Herstellung und/oder nach der Herstellung des Rundballens. Dabei bezeichnet die Aufwärtsneigung eine Aufwärtsneigung der Rundballenpresse und/oder des Untergrunds, auf welchem die Rundballenpresse aufsteht, wobei die Neigung bezüglich der Fahrtrichtung betrachtet wird. Eine Neigung quer zur Fahrtrichtung bleibt außer Acht. Eine Aufwärtsneigung in Fahrtrichtung wird hier als positive Aufwärtsneigung betrachtet, während eine Abwärtsneigung als negative Aufwärtsneigung betrachtet wird. Das heißt eine Steigung in Fahrtrichtung entspricht einer positiven Aufwärtsneigung, ein Gefälle entspricht einer negativen Aufwärtsneigung. Die Aufwärtsneigung kann zum Beispiel in Grad gemessen werden oder in Prozent. Die Ermittlung der Aufwärtsneigung erfolgt automatisch, also insbesondere ohne menschliche Gedankentätigkeit. Sie kann anhand wenigstens einer sensorischen Messung ermittelt werden, welcher eine Auswertung folgen kann, die einer oder mehreren Rechenoperationen entspricht. Das automatische Ermitteln der Aufwärtsneigung kann bevorzugt durch die Rundballenpresse erfolgen, zum Beispiel durch die oben genannte Steuereinheit mittels einer hiermit verbundenen Sensoreinheit der Rundballenpresse. Das Ermitteln kann allerdings auch wenigstens anteilig mittels eines externen Sensors und/oder einer externen Auswertungseinheit erfolgen. Beispielsweise könnten ein entsprechender Sensor und/oder eine Auswertungseinheit in einem Schlepper angeordnet sein, der die Rundballenpresse zieht. Hierzu könnte aus einer zuvor gemessenen Neigung des Schleppers auf die aktuelle Neigung der Rundballenpresse geschlossen werden. Auch könnte eine externe Auswertungseinheit anhand einer sensorisch ermittelten Position und Orientierung der Rundballenpresse sowie einer bekannten Neigung des Untergrunds die Aufwärtsneigung bestimmen. In diesem Fall könnte die Auswertungseinheit beispielsweise im Schlepper, in einer mobilen Einheit wie einem Smartphone oder Tablet, oder stationär in einem Gebäude angeordnet sein.

In einem weiteren Schritt, nach dem Ermitteln der Aufwärtsneigung, erfolgt ein automatisches Auswählen eines Standard-Übergabevorgangs, wenn die Aufwärtsneigung unter einem ersten Schwellwert liegt, oder eines Hang-Übergabevorgangs, wenn die Aufwärtsneigung über dem ersten Schwellwert liegt. Das heißt es können wenigstens zwei unterschiedliche Übergabevorgänge durchgeführt werden. Die automatisch erfolgende Auswahl hängt dabei von der Aufwärtsneigung ab. Liegt die Aufwärtsneigung unterhalb des ersten Schwellwerts, wird ein Standard-Übergabevorgang durchgeführt. Dies schließt die Möglichkeit ein, dass keine Aufwärtsneigung gegeben ist, also der Untergrund in Fahrtrichtung eben ist oder sogar abfällt. Auch kann eine Aufwärtsneigung vorliegen, die allerdings gering ist. Der erste Schwellwert ist vor der Auswahl des Übergabevorgangs vorgegeben. Er könnte werksseitig fest vorgegeben sein oder durch eine Benutzereingabe vorgegeben werden. Insbesondere kann der erste Schwellwert zwischen 0° und 18° betragen, bevorzugt zwischen 0° und 15°. Der erste Schwellwert sowie optional der weiter unten genannte zweite Schwellwerte können beispielsweise in der Steuereinheit hinterlegt sein. Liegt die Aufwärtsneigung über dem ersten Schwellwert, wird der Hang-Übergabevorgang durchgeführt. Für den Fall, dass die Aufwärtsneigung innerhalb der Messgenauigkeit genau dem ersten Schwellwert entspricht, kann festgelegt sein, dass ebenfalls der Standard-Übergabevorgang durchgeführt wird. In jedem Fall erfolgt die Auswahl automatisch, also wiederum ohne menschliche Gedankentätigkeit. Sie kann durch die gleiche Auswertungseinheit durchgeführt werden, die auch an der Ermittlung der Aufwärtsneigung beteiligt ist. Diese kann in die Rundballenpresse integriert sein, wobei sie Teil der oben genannten Steuereinheit sein oder mit dieser identisch sein kann, oder sie kann extern bezüglich der Rundballenpresse ausgebildet sein.

Insgesamt erfolgen sowohl die Ermittlung der Aufwärtsneigung als auch die Auswahl und Durchführung des geeigneten Übergabevorgangs ohne menschliche Tätigkeit oder menschliches Eingreifen. Allerdings ist die automatische Auswahl eines Übergabevorgangs nicht mit der automatischen Auslösung des Übergabevorgangs gleichzusetzen. So könnte eine automatische Auswahl darin bestehen, den entsprechenden Übergabevorgang einem Benutzer anzuzeigen und ihm die Möglichkeit einer Bestätigung zu geben, sowie optional die Möglichkeit einer Ablehnung.

In einem weiteren Schritt erfolgt ein Ausführen des ausgewählten Übergabevorgangs, also entweder des Standard-Übergabevorgangs oder des Hang-Übergabevorgangs. Der jeweilige Übergabevorgang beinhaltet ein Überführen des Rundballens von der Presskammer zum Wickeltisch. Der Übergabevorgang kann wenigstens anteilig aktorisch bewirkt werden.

Nach der Durchführung des Übergabevorgangs erfolgt ein Verstellen des Wickeltischs aus dem Aufnahmebereich in den Wickelbereich. Dies geschieht unabhängig davon, welcher Übergabevorgang durchgeführt wurde. Dementsprechend ist der Wickeltisch am Ende jedes der beiden Übergabevorgänge im Aufnahmebereich angeordnet. Dies ist, wie bereits erläutert, der Bereich, in welchem der Wickeltisch den Rundballen aufnehmen soll.

Das Verstellen des Wickeltischs dient als Vorbereitung für den eigentlichen Wickelvorgang. Dementsprechend erfolgt in einem weiteren Verfahrensschritt ein Umwickeln des Rundballens, während der Wickeltisch im Wickelbereich angeordnet ist. Der Wickeltisch kann insbesondere in einer festen Wickelposition gehalten werden.

Die beiden Übergabevorgänge unterscheiden sich hinsichtlich der Positionierung sowie Verstellung des Wickeltischs in Relation zum Überführen des Rundballens. Beim Standard-Übergabevorgang wird der Wickeltisch im Aufnahmebereich gehalten, während der Rundballen über die Überführungseinrichtung überführt wird. Das heißt der Wickeltisch ist vergleichsweise niedrig angeordnet, um insbesondere ein Fallen oder Herabrollen des Rundballens von der Überführungseinrichtung auf den Wickeltisch zu unterstützen. Anordnung und Ausgestaltung des Wickeltischs können dabei so angepasst sein, dass ein rückwärtiges Herabrollen des Rundballens ausgeschlossen ist, solange die Aufwärtsneigung unter dem ersten Schwellwert liegt. Dies kann insbesondere auf ebenem Untergrund der Fall sein.

Beim Hang-Übergabevorgang wird der Wickeltisch im Wickelbereich gehalten, während der Rundballen über die Überführungseinrichtung überführt wird, und wird danach in den Aufnahmebereich verstellt. Das heißt der Wickeltisch verbleibt zunächst im Wickelbereich und ist somit wenigstens teilweise höher angeordnet als im Aufnahmebereich. Dies gilt streng genommen bezüglich der Hochachse der Rundballenpresse, allerdings in nahezu jeder realistisch anzunehmenden Situation auch bezüglich der Richtung der Schwerkraft. Dementsprechend ist es für den Rundballen entweder schwieriger oder sogar unmöglich, unmittelbar auf den Wickeltisch zu gelangen, solange der Wickeltisch im Wickelbereich ist. Bevorzugt wird durch die Anordnung des Wickeltischs im Wickelbereich verhindert, dass der Rundballen auf den Wickeltisch gelangt. Im Weiteren wird der Wickeltisch in den Aufnahmebereich verstellt, also wenigstens teilweise abgesenkt. Das Absenken dient dazu, dem Rundballen zu ermöglichen, auf den Wickeltisch zu gelangen, sofern dies noch nicht geschehen ist. Entscheidend ist aber, dass der Wickeltisch zunächst im Wickelbereich gehalten wird. Dies kann den Rundballen abstoppen oder zumindest verlangsamen. Der Hang-Übergabevorgang setzt voraus, dass die Aufwärtsneigung den ersten Schwellenwert überschreitet. Das heißt die Rundballenpresse ist von vorne nach hinten abwärts geneigt. Dementsprechend ist der Wickeltisch in Relation zur Presskammer und zur Überführungseinrichtung tiefer angeordnet. Daher bestünde die Gefahr, dass der Rundballen bei einem Standard-Übergabevorgang nach hinten über den Wickeltisch hinausrollt. Dies wird durch die Anordnung im Wickelbereich unterbunden. Nachdem der Rundballen über die Überführungseinrichtung überführt wurde und wie beschrieben abgebremst oder gestoppt wurde, kann der Wickeltisch abgesenkt werden. Vorteilhaft weist der Rundballen zu diesem Zeitpunkt keine oder nur noch geringe Bewegungsenergie auf, weshalb der anschließende Übergang auf den Wickeltisch gut kontrollierbar ist.

Die Auswahl des geeigneten Übergabevorgangs erfolgt automatisch in Abhängigkeit von der festgestellten Aufwärtsneigung, wodurch eine hohe Prozesssicherheit bei der Ballenübergabe erreicht wird.

Bevorzugt wird die Aufwärtsneigung mittels einer Sensoreinheit der Rundballenpresse ermittelt. Bei der Sensoreinheit kann es sich insbesondere um einen Neigungssensor handeln. Dieser kann unmittelbar die Richtung der Schwerkraft mit der Ausrichtung der Rundballenpresse vergleichen. Es sind allerdings auch andere Möglichkeiten denkbar. Beispielsweise könnte die Sensoreinheit als GNSS-Sensor ausgebildet sein, mittels dessen eine Position sowie die aktuelle Fahrtrichtung der Rundballenpresse ermittelt werden kann. Sofern Daten über das Höhenprofil des Bearbeitungsbereichs vorliegen, kann hieraus die Aufwärtsneigung ermittelt werden. Neben den hier genannten Sensoren können auch andere eingesetzt werden.

Es sind Ausführungsformen des Verfahrens denkbar, bei denen der Wickeltisch beispielsweise schon vor oder während der Herstellung des Rundballens im Aufnahmebereich angeordnet ist. In diesem Fall müsste er beim Hang-Übergabevorgang zunächst in den Wickelbereich verstellt werden. Bei einer bevorzugten Ausführungsform ist der Wickeltisch allerdings zunächst im Wickelbereich angeordnet, zum Beispiel weil gerade ein vorangehender Rundballen umwickelt wurde. In diesem Fall ist vorgesehen, dass der Wickeltisch beim Standard-Übergabevorgang in den Aufnahmebereich verstellt wird, bevor der Rundballen überführt wird. D. h. in diesem Fall zeichnen sich die beiden Übergabevorgänge durch eine vertauschte Reihenfolge des Überführens und des Verstellens des Wickeltischs aus. Beim Standard-Übergabevorgang wird der Wickeltisch zunächst in den Aufnahmebereich verstellt und dann der Rundballen überführt. Beim Hang-Übergabevorgang wird zunächst der Rundballen überführt und dann der Wickeltisch in den Aufnahmebereich verstellt.

Bevorzugt wird bei wenigstens einem Übergabevorgang eine Heckklappe der Rundballenpresse geöffnet, wodurch der Rundballen auf eine Überführungsstrecke der Überführungseinrichtung gelangt. Die Heckklappe schließt die Presskammer nach hinten ab. Sie bildet einen Teil eines Gehäuses der Presskammer und kann insbesondere schwenkbar gelagert sein. Das heißt das Öffnen und Schließen der Heckklappe ist durch einen Schwenkvorgang möglich. Durch das Öffnen der Heckklappe kann der Rundballen die Presskammer verlassen, das heißt er wird ausgeworfen. Dieses Auswerfen kann optional motorisch unterstützt werden. Der ausgeworfene Rundballen gelangt bei dieser Ausführungsform auf eine Überführungsstrecke. Die Überführungsstrecke, welche auch als Überführungsbahn bezeichnet werden kann, wird durch die Überführungseinrichtung definiert. Allgemein handelt es sich hierbei um eine Struktur, die dazu ausgebildet ist, den Rundballen zu stützen eine Bewegung in Richtung des Wickeltischs zu ermöglichen. Insbesondere kann die Überführungsstrecke durch eine Rollenbahn gebildet sein, also durch eine Mehrzahl von hintereinander angeordneten drehbar gelagerten Rollen, über die sich der Rundballen beim Übergabevorgang hinweg bewegt. Um den Übergabevorgang ergonomisch zu realisieren, ist es bevorzugt, dass sich der Rundballen auf der Überführungsstrecke wenigstens anteilig schwerkraftgetrieben bewegt. "Schwerkraftgetrieben" bedeutet, dass die Bewegung des Rundballens auf der Wirkung der Schwerkraft beruht. Das heißt, der Schwerpunkt des Rundballens bewegt sich bezüglich der Wirkrichtung der Schwerkraft abwärts. Dies kann beispielsweise dadurch realisiert sein, dass die Überführungsstrecke abwärts geneigt ist. Im Falle einer Rollenbahn können also die Rollen sukzessive niedriger angeordnet sein. Optional kann auch eine Neigung der Überführungsstrecke verändert werden, um die Überführung zu unterstützen.

Der Wickeltisch kann ein Bremselement aufweisen, durch welches der Rundballen beim Hang-Übergabevorgang gebremst wird, während der Wickeltisch im Wickelbereich angeordnet ist. Wenn der Rundballen, insbesondere schwerkraftgetrieben, über die Überführungseinrichtung den Wickeltisch erreicht, kommt er in Kontakt mit dem Bremselement. Durch diesen Kontakt wird er gebremst, das heißt seine Geschwindigkeit verringert sich, was auch die Möglichkeit einer zwischenzeitlichen Bewegungsumkehr einschließt. Das heißt der Rundballen kann vom Bremselement abprallen. Auch ein solches Abprallen führt allerdings zu einem deutlichen Verlust an kinetischer Energie, das heißt der Rundballen wird langsamer. Er kann unter Umstünden schwerkraftgetrieben wieder zum Bremselement zurückkehren und schließlich an diesem anliegend zur Ruhe kommen. Es ist auch denkbar, dass die bremsende Wirkung des Bremselements wenigstens teilweise auf Reibung beruht.

Vorteilhaft ist das Bremselement bezüglich der Hochachse wenigstens teilweise oberhalb der Überführungsstrecke angeordnet, wenn der Wickeltisch im Wickelbereich angeordnet ist, und ist unterhalb der Überführungsstrecke angeordnet, wenn der Wickeltisch im Aufnahmebereich angeordnet ist. Wenn also der Wickeltisch im Wickelbereich angeordnet ist, überragt das Bremselement die Überführungsstrecke nach oben hin. Dies beschreibt die relative Anordnung bezüglich der Hochachse der Rundballenpresse, welche sich je nach Aufwärtsneigung von der Anordnung bezüglich der Vertikalen unterscheiden kann. Sofern der Höhenunterschied bezüglich der Hochachse groß genug ist, kann man allerdings davon ausgehen, dass auch bei vorliegender Aufwärtsneigung das Bremselement bezüglich der durch die Wirkrichtung der Schwerkraft definierten Vertikalen wenigstens teilweise höher angeordnet ist als die Überführungsstrecke. Somit müsste der Rundballen, um das Bremselement zu überwinden, sich von der Überführungsstrecke aus entgegen der Schwerkraft aufwärts bewegen. Die Geschwindigkeit des Rundballens beim Erreichen des Bremselements kann abgeschätzt werden und die Position des Bremselements so eingestellt werden, dass der Rundballen dieses nicht überwinden kann. Insbesondere kann das Bremselement bezüglich der Hochachse vollständig oberhalb der gesamten Überführungsstrecke angeordnet sein. Wenn der Wickeltisch im Aufnahmebereich angeordnet ist, ist das Bremselement bezüglich der Hochachse unterhalb der Überführungsstrecke angeordnet. Es stellt somit kein Hindernis mehr für den Rundballen dar, so dass dieser beispielsweise schwerkraftgetrieben über das Bremselement auf den Wickeltisch gelangen kann. Das Bremselement kann drehbar gelagert sein, zum Beispiel als Rolle, so dass sich der Rundballen mit minimalem Widerstand über das Bremselement hinweg bewegt.

Bevorzugt kann vorgesehen sein, dass beim Hang-Übergabevorgang der Wickeltisch in den Aufnahmebereich verstellt wird, wenn ein Kontakt des Rundballens mit dem Wickeltisch festgestellt wurde. Somit ist das Verstellen des Wickeltischs in den Aufnahmebereich kausal daran gekoppelt, dass der Rundballen in Kontakt mit dem Wickeltisch kommt. Bevorzugt stellt die Rundballenpresse den Kontakt automatisch fest. Hierzu kann beispielsweise ein Kraftsensor oder dergleichen eine mechanische Einwirkung des Rundballens auf den Wickeltisch detektieren. Auch andere Sensoren können eingesetzt werden, beispielsweise ein aktiver Sensor (zum Beispiel Radar-, Lidar- oder Ultraschall-Sensor), der einen noch verbleibenden Abstand des Rundballens zum Wickeltisch feststellt. Insbesondere kann ein Kontakt des Rundballens mit dem oben genennten Bremselement festgestellt werden. Nachdem der Kontakt mit dem Wickeltisch festgestellt wurde, kann das Verstellen des Wickeltischs unmittelbar erfolgen oder mit einer Verzögerung.

Vorteilhaft weist die Überführungseinrichtung ein motorisch antreibbares Hilfselement auf, das bei wenigstens einem Übergabevorgang aus einer Bereitschaftsposition verstellt wird, um das Überführen des Rundballens zu unterstützen. Das Hilfselement ist motorisch antreibbar, das heißt die Rundballenpresse weist hierzu einen motorischen Antrieb auf, der zum Beispiel als elektrischer, hydraulischer, elektrohydraulischer oder pneumatischer Antrieb ausgebildet sein kann. Zu Beginn des Verstellvorgangs ist das Hilfselement in der Bereitschaftsposition angeordnet, die auch als Ruheposition, Nullposition, Passivposition oder dergleichen bezeichnet werden kann. Die Bereitschaftsposition ist so gewählt, dass das Hilfselement in dieser Position den Betrieb anderer Elemente der Rundballenpresse nicht stört. Ausgehend von dieser Bereitschaftsposition wird das Hilfselement in eine andere Position verstellt, in welcher ist das Überführen des Rundballens unterstützt. Wie nachfolgend noch erklärt wird, kann die Unterstützung eher passiv oder eher aktiv sein.

Es kann vorgesehen sein, dass das Hilfselement bei wenigstens einem Übergabevorgang in eine Stützposition verstellt wird, um den Rundballen beim Übergang von der Presskammer zur Überführungseinrichtung zu stützen. Insbesondere kann das Hilfselement aus der Bereitschaftsposition in die Stützposition verstellt werden. In der Stützposition kann das Hilfselement bezüglich der Hochachse höher angeordnet sein als in der Bereitschaftsposition. Es kann in einem Bereich zwischen der Presskammer und der Überführungsstrecke angeordnet werden, wodurch es verhindern kann, dass der Rundballen in dem Bereich abgebremst oder gar gestoppt wird. Ein solches Abbremsen könnte aus einer Lücke resultieren, die durch das Hilfselement überbrückt werden kann. Das Hilfselement kann eine drehbar gelagerte Rolle aufweisen, über die sich der Rundballen mit minimalem Widerstand hinwegbewegen kann.

Alternativ oder zusätzlich zur Stützfunktion kann das Hilfselement eine weitere, aktive Funktion beim Übergabevorgang erfüllen. Eine Ausführungsform sieht vor, dass das Hilfselement bei wenigstens einem Übergabevorgang in eine Förderposition verstellt wird, um den Rundballen zu fördern. Man kann den Verstellvorgang auch als eine Förderbewegung des Hilfselements bezeichnen. Das Hilfselement wird motorisch angetrieben, wodurch es den Rundballen mit einer Kraft beaufschlagt, die diesen wenigstens anteilig in Richtung der Längsachse zum Wickeltisch hin bewegt. Dies schließt die Möglichkeit ein, dass der Rundballen durch das Hilfselement auf den Wickeltisch befördert wird. Das Hilfselement kann drehbar gelagert sein und nach Art eines Förderarms oder Förderhebels auf den Rundballen einwirken. Die Förderposition ist eine Position, in der die Förderwirkung des Hilfselements auf den Rundballen endet, entweder, weil es nicht über die Förderposition hinaus bewegt wird, oder, weil es in der Förderposition den Kontakt zum Rundballen verliert. Je nach Ausführungsform kann das Hilfselement aus der Bereitschaftsposition direkt in die Förderposition verstellt werden oder aus der Bereitschaftsposition zunächst in die Stützposition und dann weiter in die Förderposition. Das Hilfselement kann beim Standard-Übergabevorgang, alternativ oder zusätzlich aber auch beim Hang-Übergabevorgang zum Fördern des Rundballens genutzt werden. In jedem Fall kann der Rundballen anteilig durch die Schwerkraft und anteilig durch das Hilfselement bewegt werden.

In einigen Ausführungsformen kann das Hilfselement bedarfsweise als Förderelement eingesetzt werden, das heißt es wird nur unter bestimmten Bedingungen zum Fördern des Rundballens eingesetzt. Eine Ausführungsform sieht vor, dass beim Hang-Übergabevorgang nach dem Verstellen des Wickeltischs in den Aufnahmebereich geprüft wird, ob der Rundballen auf dem Wickeltisch aufliegt, und falls nicht, das Hilfselement in die Förderposition verstellt wird, um den Rundballen auf den Wickeltisch zu fördern. Idealerweise sollte der Rundballen schwerkraftgetrieben auf den Wickeltisch gelangen, nachdem dieser in den Aufnahmebereich verstellt wurde. Unter Umständen funktioniert dies aber nicht, zum Beispiel aufgrund der Eigenschaften des Rundballens oder weil die Aufwärtsneigung zu gering ist. Bei der hier geschilderten Ausführungsform wird geprüft, ob der Rundballen auf dem Wickeltisch aufliegt. Es ist bevorzugt, dass das Aufliegen automatisch durch wenigstens einen Sensor festgestellt wird, und dass daraufhin automatisch das Hilfselement in die Förderposition verstellt wird. Als Sensor kann insbesondere ein Kraft- oder Drehmomentsensor genutzt werden, der eine auf den Wickeltisch wirkende Kraft oder ein auf ihn wirkendes Drehmoment misst. Auch eine optische Erkennung unter Verwendung einer Kamera und eines Bilderkennungssystems wäre denkbar. Ein weiteres Beispiel wäre ein aktiver Sensor, zum Beispiel ein Radar-, Lidar- oder Ultraschallsensor, der eine Bereich oberhalb des Wickeltischs überwacht. Daneben können auch andere Arten von Sensoren eingesetzt werden. Die Überprüfung kann nach einem vorgegebenen Zeitintervall durchgeführt werden, welches berücksichtigt, dass der Rundballen eine gewisse Zeit braucht, um auf dem Wickeltisch anzukommen.

Vorteilhaft wird nach wenigstens einem Übergabevorgang der Wickeltisch in den Wickelbereich verstellt und/oder das Hilfselement wird in die Bereitschaftsposition verstellt, wenn ein Aufliegen des Rundballens auf dem Wickeltisch festgestellt wurde. Das Verstellen des Wickeltischs und/oder das Verstellen des Hilfselements erfolgen also erst dann, wenn festgestellt werden konnte, dass die Überführung des Rundballens erfolgreich war und dieser auf dem Wickeltisch aufliegt. Auch hier ist bevorzugt, dass das Aufliegen automatisch durch wenigstens einen Sensor festgestellt wird, und dass weiterhin daraufhin automatisch der Wickeltisch und/oder das Hilfselement verstellt werden. Mögliche Sensortypen wurden bereits beschrieben. Nach Erkennen des Aufliegens kann der Verstellvorgang unmittelbar ausgelöst werden oder mit einer zeitlichen Verzögerung. Letztere kann zum Beispiel dazu dienen, dem Rundballen Zeit zu geben, sich auf dem Wickeltisch einer Ruhelage zumindest anzunähern, falls zu befürchten ist, dass andernfalls die Bewegung des Wickeltischs eine unerwünschte Bewegung des Rundballens auslösen oder verstärken könnte.

Bei einer besonders starken Aufwärtsneigung besteht die Möglichkeit, dass der Rundballen auch bei einem Hang-Übergabevorgang nach hinten über den Wickeltisch hinausrollt und/oder -gleitet. Daher ist in einer Fortbildung des Verfahrens vorgesehen, dass beide Übergabevorgänge unterbunden werden, wenn die Aufwärtsneigung über einem zweiten Schwellwert liegt, der über dem ersten Schwellwert liegt. Das heißt wenn die Neigung zwischen den beiden Schwellwerten liegt, wird der Hang-Übergabevorgang wie beschrieben durchgeführt. Liegt die Steigung über dem zweiten Schwellwert, wird verhindert, dass ein Übergabevorgang durchgeführt wird. Dabei kann insbesondere verhindert werden, dass die Heckklappe geöffnet wird. Es kann ein Hinweis für den Fahrer der Rundballenpresse oder des Zugfahrzeugs ausgegeben werden, zum Beispiel optisch oder akustisch, anhand dessen der Fahrer erkennt, dass derzeit kein Übergabevorgang und somit auch kein Wickelvorgang möglich ist. Sobald die Aufwärtsneigung wieder unter den zweiten Schwellwert gefallen ist, kann der Übergabevorgang durchgeführt werden. Wie der erste Schwellwert ist auch der zweite Schwellwert vor der Auswahl des Übergabevorgangs vorgegeben. Er könnte werksseitig fest vorgegeben sein oder durch eine Benutzereingabe vorgegeben werden. Insbesondere kann der zweite Schwellwert maximal 29° betragen, bevorzugt maximal 26°.

Die Aufgabe wird weiterhin gelöst mit einer Rundballenpresse, insbesondere zur Durchführung des erfindungsgemäßen Verfahrens, mit einer Presskammer zum Pressen eines Rundballens, einer Wickelvorrichtung zum Umwickeln des gepressten Rundballens mit einem Wickelmaterial, aufweisend einen Wickeltisch zur Aufnahme des Rundballens, sowie mit einer Überführungseinrichtung, über die der gepresste Rundballen wenigstens anteilig entlang einer Längsachse der Rundballenpresse entgegen einer Fahrtrichtung von der Presskammer zur Wickelvorrichtung überführbar ist, wobei der Wickeltisch verstellbar ist zwischen einem Aufnahmebereich, der wenigstens einer Aufnahmeposition entspricht, und einem Wickelbereich, der wenigstens einer Wickelposition entspricht und in welchem der Wickeltisch wenigstens teilweise bezüglich einer Hochachse höher angeordnet ist als im Aufnahmebereich.

Die Rundballenpresse ist dazu eingerichtet:
- den Rundballen in der Presskammer herzustellen,
- eine bezüglich der Fahrtrichtung gegebenen Aufwärtsneigung automatisch zu ermitteln,
- einen Standard-Übergabevorgang automatisch auszuwählen, wenn die Aufwärtsneigung unter einem ersten Schwellwert liegt, oder einen Hang-Übergabevorgang, wenn die Aufwärtsneigung über dem ersten Schwellwert liegt,
- den ausgewählten Übergabevorgang durchzuführen,
- den Wickeltisch aus dem Aufnahmebereich in den Wickelbereich zu verstellen, und
- den Rundballen zu umwickeln, während der Wickeltisch im Wickelbereich angeordnet ist.

Weiterhin ist die Rundballenpresse eingerichtet, beim Standard-Übergabevorgang den Wickeltisch im Aufnahmebereich zu halten, während der Rundballen über die Überführungseinrichtung überführt wird, und beim Hang-Übergabevorgang den Wickeltisch im Wickelbereich zu halten, während der Rundballen über die Überführungseinrichtung überführt wird, und danach den Wickeltisch in den Aufnahmebereich zu verstellen.

Bevorzugt weist die Rundballenpresse eine Steuereinheit auf, die in der oben erläuterten Weise eingerichtet ist. Die Steuereinheit ist bevorzugt zur Steuerung der Rundballenpresse, insbesondere zur Durchführung des Verfahrens, eingerichtet.

Durch die Auswahl des geeigneten Übergabevorgangs wird eine hohe Prozesssicherheit bei der Ballenübergabe erreicht. Insbesondere wird dadurch verhindert, dass der gepresste Rundballen bei Abwärtsneigung der Rundballenpresse unkontrolliert in den Wickeltisch hineinrollt, so dass die Überführungseinrichtung und/oder der Wickeltisch beschädigt werden, oder sogar über diesen hinausrollt und verloren geht.

Die genannten Begriffe wurden bereits oben mit Bezug auf das erfindungsgemäße Verfahren erläutert und werden daher nicht nochmals erklärt. Vorteilhafte Ausgestaltungen der erfindungsgemäßen Rundballenpresse entsprechen denen des erfindungsgemäßen Verfahrens.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine vereinfachte Seitenansicht einer erfindungsgemäßen Rundballenpresse;
- Fig. 2: ein Flussdiagramm eines erfindungsgemäßen Verfahrens;
- Fig. 3: eine schematische Seitenansicht der Rundballenpresse aus Fig.1 unter Veranschaulichung einer Aufwärtsneigung; sowie
- Fig. 4A-5E: schematische Seitenansichten der Rundballenpresse aus Fig.1 während verschiedener Schritte des Verfahrens.

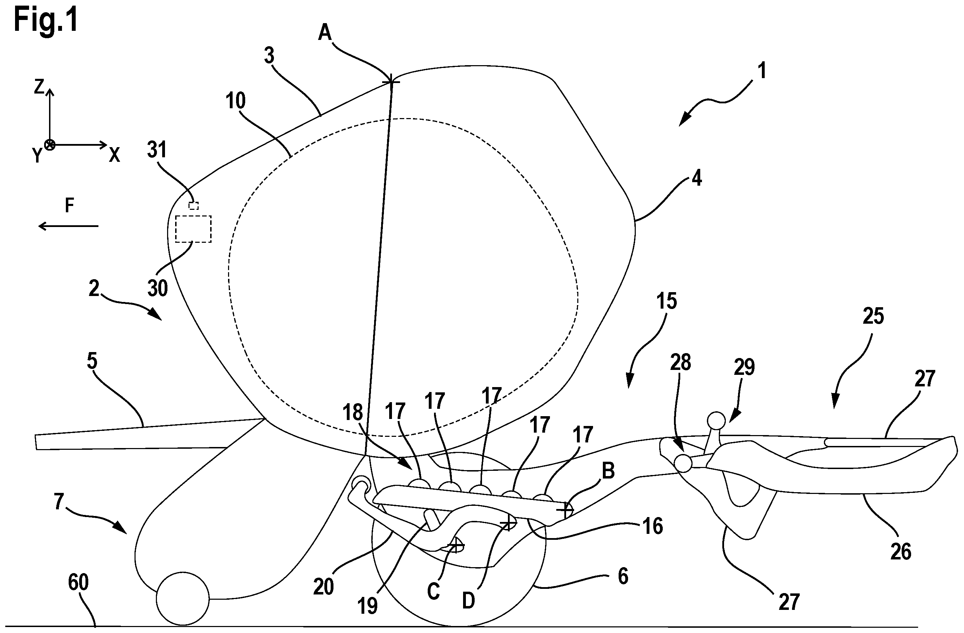

Fig. 1 zeigt eine Seitenansicht einer erfindungsgemäßen Rundballenpresse 1. Die Darstellung ist aus Gründen der Übersichtlichkeit vereinfacht. Insbesondere wurden Teile weggelassen, um dahinterliegende Komponenten sichtbar zu machen. Hier und in den weiteren Figuren sind jeweils eine Längsachse X, eine Querachse Y sowie eine Hochachse Z der Rundballenpresse 1 eingezeichnet. Die nach hinten weisende Längsachse X verläuft antiparallel zu einer Fahrtrichtung F. Erkennbar ist ein Rahmen 2 der Rundballenpresse 1, der für die strukturelle Stabilität sorgt und ein Gehäuse 3 aufweist. Am Gehäuse 3 ist eine Heckklappe 4 angeordnet, die um eine Klappenachse A schwenkbar ist. Die gezeigte Rundballenpresse 1 ist dazu eingerichtet, von einem nicht dargestellten Schlepper gezogen zu werden. Sie weist dazu eine am Rahmen 2 angeordnete Deichsel 5 zur Verbindung mit dem Schlepper auf sowie Laufräder 6, auf welchen sie aufsteht. Alternativ könnte es sich aber auch um eine selbstfahrende Rundballenpresse 1 handeln.

Vorderseitig des Gehäuses 3 ist eine Aufnahmevorrichtung oder Pickup 7 angeordnet, mittels welcher Erntegut (zum Beispiel Gras, Heu oder dergleichen) vom Boden aufgenommen werden kann. Mittels hier nicht dargestellter Förderorgane wird das Erntegut einer Presskammer 10 zugeführt, die innerhalb des Gehäuses ausgebildet ist. Die Ausdehnung der Presskammer 10 ist in Fig.1 nur angedeutet und kann sich von der tatsächlichen Ausdehnung unterscheiden. Es kann sich um eine variable Presskammer 10 handeln, die durch eine Mehrzahl umlaufender Pressriemen definiert ist. Allerdings sind auch andere Bauformen denkbar. Innerhalb der Presskammer 10 erfolgt eine Ballenbildung, das heißt das Erntegut wird zu einem Rundballen 50 verpresst.

Bezüglich der Längsachse X hinter dem Gehäuse 3 sind eine Überführungseinrichtung 15 sowie eine Wickelvorrichtung 25 angeordnet. Die Überführungseinrichtung 15 weist eine Überführungsstrecke 16 auf, die durch mit eine Mehrzahl von Überführungsrollen 17 gebildet ist, die wiederum an einem Überführungsrahmen 16 drehbar gelagert sind. Der Überführungsrahmen 16 ist um eine Überführungsschwenkachse B schwenkbar. Der Schwenkvorgang kann durch einen unterseitig am Überführungsrahmen 16 angreifendes Stützelement 19 gesteuert werden, welches seinerseits mittels eines nicht dargestellten Aktors um eine Stützschwenkachse C schwenkbar ist. Des Weiteren weist die Überführungseinrichtung 15 ein Hilfselement 20 auf, das auch als Hilfsarm bezeichnet werden kann. Es ist mittels eines ebenfalls nicht dargestellten Aktors um eine Hilfsschwenkachse D schwenkbar. Die Wickelvorrichtung 25 weist einen Wickeltisch 26 auf, der über Aufhängungsarme 27 verstellbar mit dem Rahmen 2 verbunden ist. Die Verstellung des Wickeltischs 26 ist wiederum durch einen nicht dargestellten Aktor steuerbar. An einem in Fahrtrichtung F vorderen Ende des Wickeltischs 26 ist ein Bremselement 28 angeordnet, welches eine drehbare Bremsrolle aufweist. Abgesehen von der Drehbarkeit der Bremsrolle ist das Bremselement 28 stationär am Wickeltisch 26 angeordnet. Des Weiteren ist benachbart zum Bremselement 28 ein Sperrelement 29 angeordnet, das ebenfalls eine drehbar gelagerte Rolle aufweist. Es ist in seiner Gesamtheit elastisch gegenüber dem Wickeltisch 26 auslenkbar. Zum Applizieren eines Wickelmaterials, zum Beispiel einer Folie, weist die Wickelvorrichtung hier nicht dargestellte Wickelorgane auf, zum Beispiel drehbar antreibbare Wickelarme.

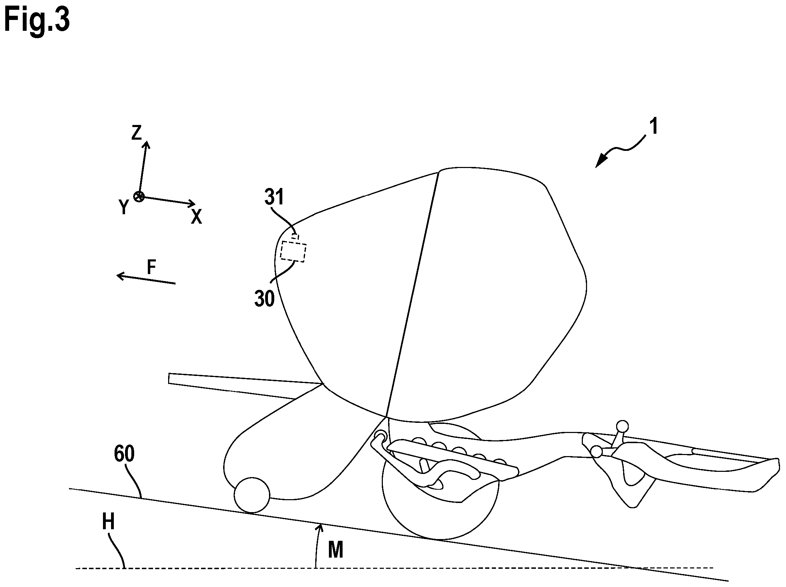

Am Rahmen 2 sind außerdem ein Neigungssensor 31 sowie eine Steuereinheit 30 angeordnet. Der Neigungssensor 31 liefert einen Messwert, der eine in Fahrtrichtung F gegebene Aufwärtsneigung M repräsentiert. Die Aufwärtsneigung M ist eine Neigung des Untergrunds 60 gegenüber einer Horizontalebene **H,** die senkrecht zur Wirkrichtung der Schwerkraft verläuft. Dabei wird allerdings nur die in Neigung in Fahrtrichtung F betrachtet, eine quer zur Fahrtrichtung F verlaufende Neigung bleibt außer Acht. Ebenso kann die Aufwärtsneigung als Neigung der Längsachse X gegenüber der Horizontalebene H angesehen werden. Fig.3 zeigt schematisch eine Situation, in welcher eine positive Aufwärtsneigung M vorliegt. Die Aufwärtsneigung M ist hier als Steigungswinkel dargestellt, kann aber auch beispielsweise als Steigungsquotient oder in Prozent definiert werden. Die Steuereinheit 30 kann verschiedene Funktionen der Rundballenpresse 1 steuern. Hierzu kann sie insbesondere signalübertragend mit den oben erwähnten Aktoren verbunden sein. Des Weiteren kann sie mit dem Neigungssensor 31 verbunden sein, um Messwerte von diesem zu empfangen. Die Steuereinheit 30 kann teilweise softwaremäßig realisiert sein. Entgegen der hier dargestellten Ausführungsform kann die Steuereinheit 30 auch ganz oder teilweise außerhalb der Rundballenpresse 1 angeordnet sein, beispielsweise in einem mobilen Gerät wie einem Tablet oder Smartphone, , im Schlepper, oder in einem Gebäude.

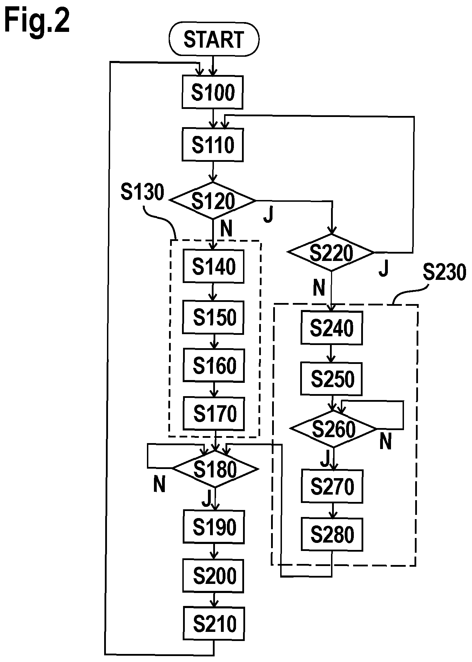

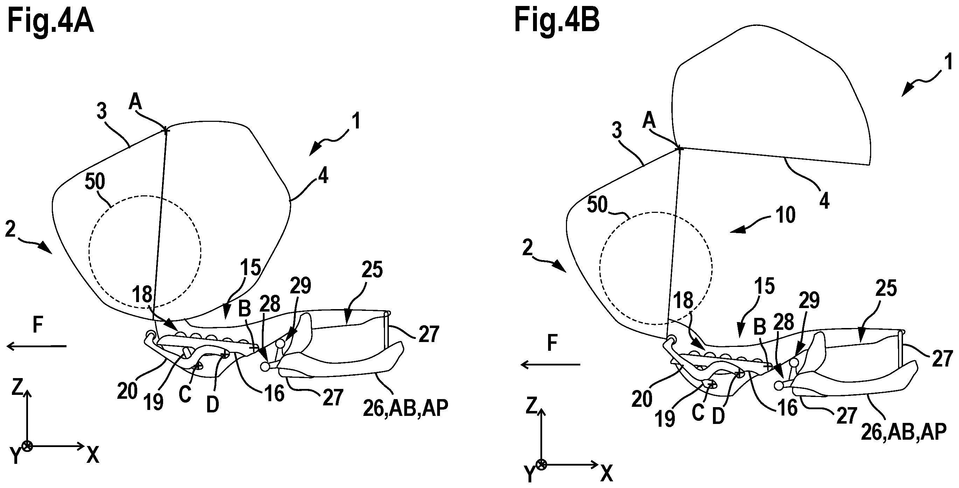

Mittels der dargestellten Rundballenpresse 1 kann ein erfindungsgemäßes Verfahren durchgeführt werden, welches nun mit Bezug auf das Flussdiagramm in Fig.2 sowie die Figuren 4A-4F sowie 5A-5E erläutert wird. Dabei ist in den Figuren die Längsachse X jeweils waagerecht eingezeichnet, das heißt Aufwärtsneigung M ist nicht dargestellt. Nach dem Start erfolgt in Schritt S100 eine Ballenbildung innerhalb der Presskammer 10. Gegen Ende der Ballenbildung oder danach wird in Schritt S110 die Aufwärtsneigung M ermittelt. In einem weiteren Schritt S120 wird die Aufwärtsneigung M mit einem ersten Schwellwert verglichen, der zum Beispiel in der Steuereinheit 30 hinterlegt sein kann, und anhand des Vergleichs eine automatische Auswahl eines Übergabevorgangs S130, S230 getroffen. Der erste Schwellwert kann vorteilhaft zwischen 0° und 18° liegen, insbesondere zwischen 0° und 15°. Die Auswahl kann ebenfalls durch die Steuereinheit 30 erfolgen. Liegt die Aufwärtsneigung M unterhalb des ersten Schwellwerts, wird automatisch ein Standard-Übergabevorgang S130 ausgewählt. Die Auswahl die Auswahl könnte einem Benutzer (zum Beispiel innerhalb des Schleppers oder an einem anderen Ort) angezeigt werden, wobei der Benutzer die Möglichkeit einer Bestätigung oder Ablehnung haben könnte. Insbesondere kann der ausgewählte Übergabevorgang S130, S230 automatisch eingeleitet werden. Fig. 4A zeigt die Rundballenpresse 1 unmittelbar nach der Fertigstellung des Rundballens 50. Das Hilfselement 20 ist in einer Bereitschaftsposition angeordnet und die Überführungsstrecke 18 ist in einer Absenkposition angeordnet, in welcher sie nur wenig gegenüber der Längsachse X geneigt ist. Aufgrund der Auswahl des Standard-Übergabevorgangs S130 wird der Wickeltisch 26 in einem Schritt S140 in einen Aufnahmebereich AB verstellt, der einer Aufnahmeposition AP entspricht. Bezüglich der Hochachse Z ist der Wickeltisch 26 in der in Fig.4A gezeigten Aufnahmeposition AP zumindest überwiegend niedriger angeordnet als die Überführungsstrecke 18.

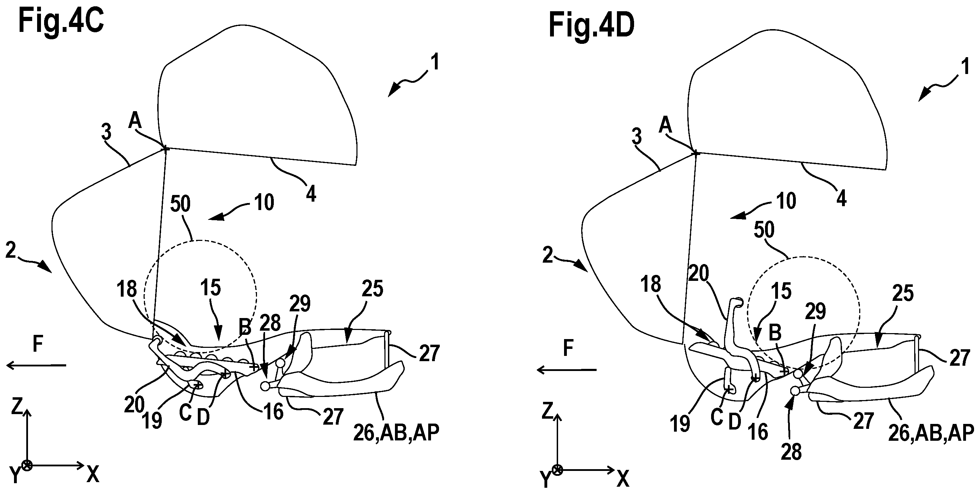

In einem weiteren Schritt S150 wird das Hilfselement 20 um die Hilfsschwenkachse D in eine Stützposition geschwenkt, die in Fig. 4B dargestellt ist. Dies dient dazu, den Übergang des Rundballens 50 von der Presskammer 10 zur Überführungsstrecke 18 zu unterstützen. Wie ebenfalls in Fig. 4B dargestellt ist, wird in einem weiteren Schritt S160 die Heckklappe 4 geöffnet, so dass der Rundballen 50 die Presskammer 10 verlassen kann. Dies kann teilweise schwerkraftgetrieben erfolgen, insbesondere kann der Rundballen 50 aber auch aktiv ausgeworfen werden, beispielsweise indem er durch die oben genannten Pressriemen aus der Presskammer 10 gedrückt wird. Wie in Fig. 4C dargestellt, gelangt der Rundballen 50 auf die Überführungsstrecke 18, über welche er sich in Richtung des Wickeltischs 26 bewegt. Dieser Vorgang wird dadurch unterstützt, dass wie in Fig. 4D erkennbar, das Stützelement 19 gegen den Überführungsrahmen 16 drückt, wodurch die Überführungsstrecke 18 in eine Hubposition verstellt wird, in welcher sie stärker gegen die Längsachse X geneigt ist. Das Sperrelement 29 kann unter dem Gewicht des Rundballens 50 elastisch nachgeben und diesem somit nach unten ausweichen. Idealerweise erreicht der Rundballen 50 durch die genannten Maßnahmen bereits den Wickeltisch 26. Ob dies der Fall ist, kann durch einen nicht dargestellten Sensor überprüft werden. Entweder standardmäßig oder wenn der Rundballen 50 nach einer gewissen Zeit noch nicht auf dem Wickeltisch 26 angekommen ist, kann das Hilfselement 20 in einem Schritt S170 aus der Stützposition weiter in eine Förderposition geschwenkt werden, so dass es aktiv den Rundballen 50 in Richtung des Wickeltischs 26 drückt. Fig. 4D zeigt das Hilfselement 20 in der Förderposition.

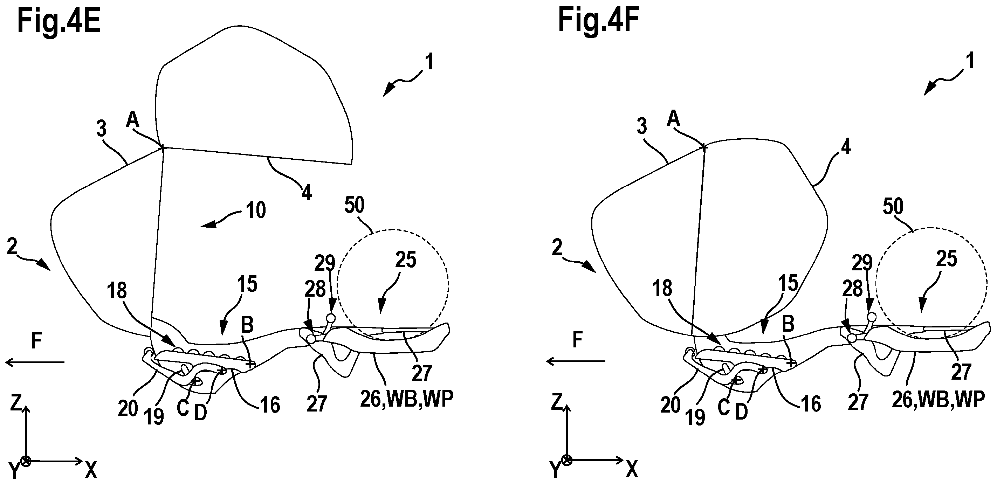

Während der gesamten Überführung des Rundballens 50 über die Überführungseinrichtung 15 wird der Wickeltisch 26 in der Aufnahmeposition AP gehalten. In einem Schritt S180 wird sensorisch überprüft, ob der Rundballen 50 auf dem Wickeltisch 26 angekommen ist. Sobald dies der Fall ist, wird der Wickeltisch 26 in einem Schritt S190 aus dem Aufnahmebereich AB in einen Wickelbereich WB verstellt, der durch eine Wickelposition WP definiert ist. Außerdem wird das Hilfselement 20 zurück in die Bereitschaftsposition verstellt und die Überführungsstrecke 18 in die Absenkposition verstellt. Fig. 4 zeigt den Wickeltisch 26 in der Wickelposition WP. In einem Schritt S200 wird die Heckklappe 4 geschlossen, wie in Fig. 4F dargestellt. In einem Schritt S210 wird der Rundballen 50 in der Wickelvorrichtung 25 umwickelt. Das Verfahren kehrt zu Schritt S100 zurück, wo die nächste Ballenbildung erfolgt. Es ist darauf hinzuweisen, dass diese nächste Ballenbildung auch zeitlich parallel zum Umwickeln des vorherigen Rundballens 50 in Schritt S210 erfolgen kann.

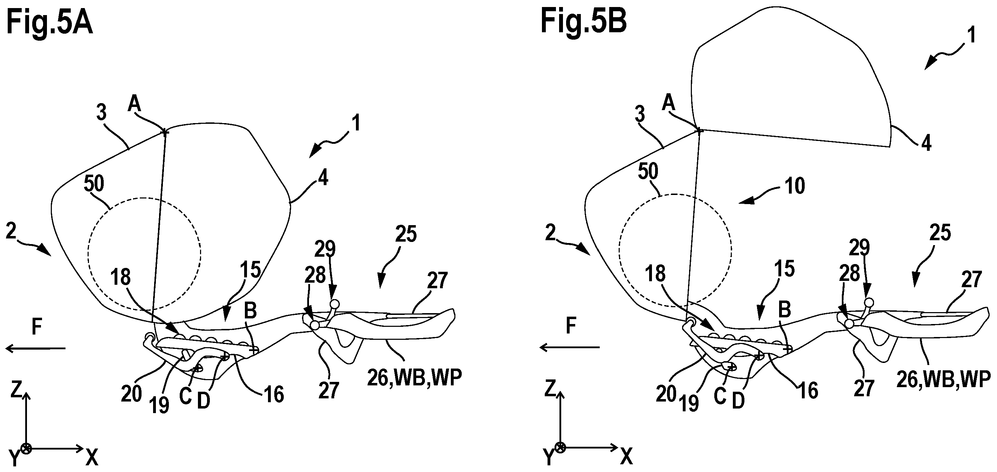

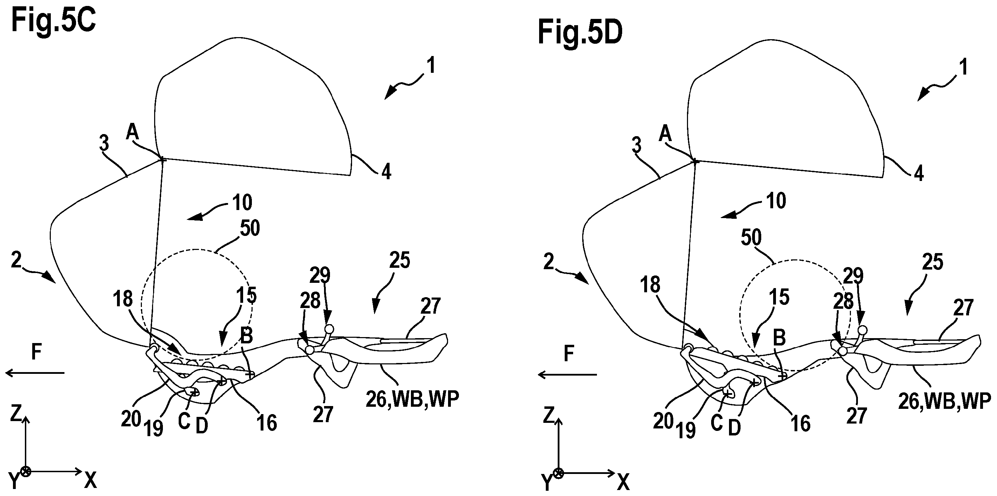

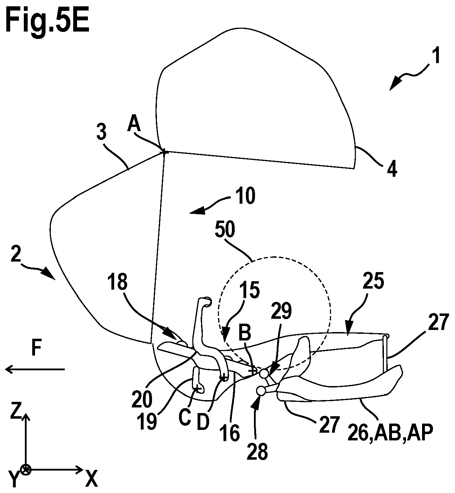

Wird in Schritt S120 festgestellt, dass die Aufwärtsneigung über dem ersten Schwellwert liegt, wird in einem Schritt S220 überprüft, ob die Aufwärtsneigung M auch über einem noch höheren zweiten Schwellwert liegt, der vorteilhaft maximal 29° betragen kann, insbesondere maximal 26°. Ist dies nicht der Fall, wird ein Hang-Übergabevorgang S230 ausgewählt. Der Wickeltisch 26 wird im Wickelbereich WB gehalten, während in einem Schritt S240 das Hilfselement 20 um die Hilfsschwenkachse D in die Stützposition geschwenkt wird und in einem weiteren Schritt S250 die Heckklappe 4 geöffnet wird, so dass der Rundballen 50 die Presskammer 10 verlassen kann, wie in Fig.5B dargestellt. Wie in Fig. 5C dargestellt, gelangt der Rundballen 50 auf die Überführungsstrecke 18, wobei seine Bewegung wiederum unterstützt wird, indem die Überführungsstrecke 18 in die Hubposition verstellt wird, wie in Fig.5D gezeigt. Der Rundballen 50 gelangt schließlich in Kontakt mit dem Bremselement 28 des Wickeltischs 26. Da dieses höher angeordnet ist als die Überführungsstrecke 18, kann es vom Rundballen 50 nicht überwunden werden. Dieser wird somit gestoppt oder bewegt sich kurzzeitig in Gegenrichtung, bevor er schließlich am Bremselement 28 zur Ruhe kommt. Das Anliegen des Rundballens 50 am Bremselement 28 kann durch einen nicht gezeigten Sensor festgestellt werden. In Schritt S260 wird überprüft, ob der Rundballen 50 schon am Bremselement 28 anliegt. Falls ja, wird in einem weiteren Schritt S270 der Wickeltisch 26 in die Aufnahmeposition AP verstellt. Unter Umständen erreicht der Rundballen 50 dann allein aufgrund der Schwerkraft bereits den Wickeltisch 26. Entweder standardmäßig oder wenn der Rundballen 50 nach einer gewissen Zeit noch nicht auf dem Wickeltisch 26 angekommen ist, kann das Hilfselement 20 in einem Schritt S280 aus der Stützposition weiter in eine Förderposition geschwenkt werden, so dass es aktiv den Rundballen 50 in Richtung des Wickeltischs 26 drückt. Fig. 5E zeigt das Hilfselement 20 in der Förderposition. Der Hang-Übergabevorgang S230 ist nun abgeschlossen und das Verfahren fährt bei Schritt S190 fort.

Wird in Schritt S220 festgestellt, dass die Aufwärtsneigung M über dem zweiten Schwellenwert liegt, wird kein Übergabevorgang S130, S230 durchgeführt, da eine zu große Gefahr besteht, dass der Rundballen 50 nach hinten über den Wickeltisch 50 hinausrollen oder -gleiten könnte. Daher kehrt das Verfahren zu Schritt S110 zurück. Im Lauf der weiteren Fahrt der Rundballenpresse 1 wird schließlich wieder ein Bereich mit geringerer Aufwärtsneigung erreicht, so dass einer der beiden Übergabevorgänge S130, S230 durchgeführt werden kann.

## Patentansprüche

1. Verfahren zum Betreiben einer Rundballenpresse (1) mit einer Presskammer (10) zum Pressen eines Rundballens (50), einer Wickelvorrichtung (25) zum Umwickeln des gepressten Rundballens (50) mit einem Wickelmaterial, aufweisend einen Wickeltisch (26) zur Aufnahme des Rundballens (50), sowie mit einer Überführungseinrichtung (15), über die der gepresste Rundballen (50) wenigstens anteilig entlang einer Längsachse (X) der Rundballenpresse entgegen einer Fahrtrichtung (F) von der Presskammer (10) zur Wickelvorrichtung (25) überführbar ist, wobei der Wickeltisch (26) verstellbar ist zwischen einem Aufnahmebereich (AB), der wenigstens einer Aufnahmeposition (AP) entspricht, und einem Wickelbereich (WB), der wenigstens einer Wickelposition (WP) entspricht und in welchem der Wickeltisch (26) wenigstens teilweise bezüglich einer Hochachse (Z) höher angeordnet ist als im Aufnahmebereich (AB), wobei das Verfahren wenigstens die folgenden Schritte aufweist:
- Herstellen (S100) des Rundballens (50) in der Presskammer (10),
- automatisches Ermitteln (S110) einer in Fahrtrichtung (F) gegebenen Aufwärtsneigung (M),
- automatisches Auswählen (S120) eines Standard-Übergabevorgangs (S130), wenn die Aufwärtsneigung (M) unter einem ersten Schwellwert liegt, oder eines Hang-Übergabevorgangs (S230), wenn die Aufwärtsneigung (M) über dem ersten Schwellwert liegt,
- Ausführen des ausgewählten Übergabevorgangs (S130, S230),
- Verstellen (S190) des Wickeltischs (26) aus dem Aufnahmebereich (AB) in den Wickelbereich (WB), und
- Umwickeln (S210) des Rundballens (50), während der Wickeltisch (26) im Wickelbereich (WB) angeordnet ist,
wobei beim Standard-Übergabevorgang (S130) der Wickeltisch (26) im Aufnahmebereich (AB) gehalten wird, während der Rundballen (50) über die Überführungseinrichtung (15) überführt wird, und beim Hang-Übergabevorgang (S230) der Wickeltisch (26) im Wickelbereich (WB) gehalten wird, während der Rundballen (50) über die Überführungseinrichtung überführt wird, und danach in den Aufnahmebereich (AB) verstellt wird (S270).

2. Verfahren nach Anspruch 1, **dadurch gekennzeichnet, dass** die Aufwärtsneigung (M) automatisch mittels einer Sensoreinheit (30) der Rundballenpresse (1) ermittelt wird (S110).

3. Verfahren nach einem der vorangehenden Ansprüche, **dadurch gekennzeichnet, dass** der Wickeltisch (26) beim Standard-Übergabevorgang (S130) in den Aufnahmebereich (AB) verstellt wird, bevor der Rundballen (50) überführt wird.

4. Verfahren nach einem der vorangehenden Ansprüche, **dadurch gekennzeichnet, dass** bei wenigstens einem Übergabevorgang (S130, S230) eine Heckklappe (4) der Rundballenpresse (1) geöffnet wird (S160, S250), wodurch der Rundballen (50) auf eine Überführungsstrecke (18) der Überführungseinrichtung (15) gelangt, auf welcher er sich bevorzugt wenigstens anteilig schwerkraftgetrieben bewegt.

5. Verfahren nach einem der vorangehenden Ansprüche, **dadurch gekennzeichnet, dass** der Wickeltisch (26) ein Bremselement (28) aufweist, durch welches der Rundballen beim Hang-Übergabevorgang (S230) gebremst wird, während der Wickeltisch (26) im Wickelbereich (WB) angeordnet ist.

6. Verfahren nach einem der vorhergehenden Ansprüche, **dadurch gekennzeichnet, dass** das Bremselement (28) bezüglich der Hochachse (Z) wenigstens teilweise oberhalb der Überführungsstrecke (18) angeordnet ist, wenn der Wickeltisch (26) im Wickelbereich (WB) angeordnet ist, und unterhalb der Überführungsstrecke (18) angeordnet ist, wenn der Wickeltisch (26) im Aufnahmebereich (AB) angeordnet ist.

7. Verfahren nach einem der vorangehenden Ansprüche, **dadurch gekennzeichnet, dass** die Überführungseinrichtung (15) ein motorisch antreibbares Hilfselement (20) aufweist, das bei wenigstens einem Übergabevorgang (S130, S230) aus einer Bereitschaftsposition verstellt wird, um das Überführen des Rundballens (50) zu unterstützen.

8. Verfahren nach einem der vorangehenden Ansprüche, **dadurch gekennzeichnet, dass** das Hilfselement (20) bei wenigstens einem Übergabevorgang (S130, S230) in eine Stützposition verstellt wird, um den Rundballen (50) beim Übergang von der Presskammer (10) zur Überführungseinrichtung (15) zu stützen.

9. Verfahren nach einem der vorangehenden Ansprüche, **dadurch gekennzeichnet, dass** das Hilfselement (20) bei wenigstens einem Übergabevorgang (S130, S230) in eine Förderposition verstellt wird, um den Rundballen (50) zu fördern.

10. Verfahren nach einem der vorangehenden Ansprüche, **dadurch gekennzeichnet, dass** beim Hang-Übergabevorgang (S230) nach dem Verstellen des Wickeltischs (26) in den Aufnahmebereich (AB) geprüft wird, ob der Rundballen (50) auf dem Wickeltisch (26) aufliegt, und falls nicht, das Hilfselement (20) in die Förderposition verstellt wird, um den Rundballen (50) auf den Wickeltisch (26) zu fördern.

11. Verfahren nach einem der vorangehenden Ansprüche, **dadurch gekennzeichnet, dass** nach wenigstens einem Übergabevorgang (S130, S230) der Wickeltisch (26) in den Wickelbereich (WB) verstellt wird (S190) und/oder das Hilfselement (20) in die Bereitschaftsposition verstellt wird, wenn ein Aufliegen des Rundballens (50) auf dem Wickeltisch (26) festgestellt wurde (S180).

12. Verfahren nach einem der vorangehenden Ansprüche, **dadurch gekennzeichnet, dass** beide Übergabevorgänge (S130, S230) unterbunden werden, wenn die Aufwärtsneigung (M) über einem zweiten Schwellwert liegt, der über dem ersten Schwellwert liegt.

13. Rundballenpresse (1) mit einer Presskammer (10) zum Pressen eines Rundballens (50), einer Wickelvorrichtung (25) zum Umwickeln des gepressten Rundballens (50) mit einem Wickelmaterial, aufweisend einen Wickeltisch (26) zur Aufnahme des Rundballens (50), sowie mit einer Überführungseinrichtung (15), über die der gepresste Rundballen (50) wenigstens anteilig entlang einer Längsachse (X) der Rundballenpresse entgegen einer Fahrtrichtung (F) von der Presskammer (10) zur Wickelvorrichtung (25) überführbar ist, wobei der Wickeltisch (26) verstellbar ist zwischen einem Aufnahmebereich (AB), der wenigstens einer Aufnahmeposition (AP) entspricht, und einem Wickelbereich (WB), der wenigstens einer Wickelposition (WP) entspricht und in welchem der Wickeltisch (26) wenigstens teilweise bezüglich einer Hochachse (Z) höher angeordnet ist als im Aufnahmebereich (AB), wobei die Rundballenpresse (1) dazu eingerichtet ist:
- den Rundballen (50) in der Presskammer (10) herzustellen (S100),
- eine in Fahrtrichtung (F) gegebenen Aufwärtsneigung (M) automatisch zu ermitteln (S110),
- einen Standard-Übergabevorgang (S130) automatisch auszuwählen (S120), wenn die Aufwärtsneigung (M) unter einem ersten Schwellwert liegt, oder einen Hang-Übergabevorgang (S230), wenn die Aufwärtsneigung (M) über dem ersten Schwellwert liegt,
- den ausgewählten Übergabevorgang (S130, S230) auszuführen,
- den Wickeltisch (26) aus dem Aufnahmebereich (AB) in den Wickelbereich (WB) zu verstellen (S190), und
- den Rundballen (50) zu umwickeln (S210), während der Wickeltisch (26) im Wickelbereich (WB) angeordnet ist,
wobei die Rundballenpresse (1) eingerichtet ist, beim Standard-Übergabevorgang (S130) den Wickeltisch (26) im Aufnahmebereich (AB) zu halten, während der Rundballen (50) über die Überführungseinrichtung (15) überführt wird, und beim Hang-Übergabevorgang (S230) den Wickeltisch (26) im Wickelbereich (WB) zu halten, während der Rundballen (50) über die Überführungseinrichtung überführt wird, und danach in den Aufnahmebereich (AB) zu verstellen (S270).
